# EUROPÄISCHE PATENTSCHRIFT

(11) **EP 0 875 352 B1**
(45) Veröffentlichungstag und Bekanntmachung des Hinweises auf die Patenterteilung: **07.06.2000**
(21) Anmeldenummer: 98105930.6
(22) Anmeldetag: 01.04.1998
(51) Int. Cl.: B29C 45/14, B60J 1/04, B29C 39/10, F16B 12/04, F16B 12/10, E05D 3/02

(54) **Verfahren und Vorrichtung zum Herstellen einer verstellbaren Verbindung zwischen Bauteilen, mit einem die Bauteile verbindenden Verbindungselement**
Process and apparatus to produce an adjustable connexion between parts provided with a connection element connecting the parts
Procédé et appareil pour produire une liaison ajustable entre des pièces, avec un élément de connection connectant les pièces

(30) Priorität: 29.04.1997 DE 19717934; 05.11.1997 DE 19748831
(43) Veröffentlichungstag der Anmeldung: 04.11.1998
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, 31515 Wunstorf (DE)
(74) Vertreter: Jabbusch, Wolfgang, Dr.Jur. Jabbusch, Wehser & Lauerwald Patentanwälte

(56) Entgegenhaltungen:
- EP-A- 0 610 691
- EP-A- 0 705 726
- FR-A- 2 641 311
- GB-A- 1 452 812
- JP-A- 9 100 670

## Beschreibung

Die Erfindung betrifft ein Verfahren zum Herstellen einer verstellbaren Verbindung zwischen Bauteilen, mit einem die Bauteile verbindenden Verbindungselement.

Es wurde schon vorgeschlagen, eine feste Verbindung zwischen zwei Bauteilen dadurch herzustellen, daß auf das erste Bauteil im Verbindungsbereich ein Kleber aufgetragen wird, und daß auf den Kleber dann ein Verbindungsteil aufgesetzt und somit mit dem ersten Bauteil verbunden wird, und daß dann ein zweites Bauteil mit dem Verbindungsteil verbunden wird (GB-A-1,452 812) Verwegen wird ferner auf EP-A-870 933.

Der Erfindung liegt die Aufgabe zugrunde, ein solches Verbindungssystem dahingehend weiter zu entwickeln, daß die Verbindung verstellbar bzw. verschiebbar ist.

Zur Lösung dieser Aufgabe wird ein Verfahren nach Anspruch 1 vorgeschlagen, welches sich dadurch auszeichnet, daß das Verbindungselement auf ein erstes Bauteil aufgesetzt wird, daß auf wenigstens einer Seite des Verbindungselementes auf das Bauteil in dem Verbindungsbereich mit einem auszuformenden Halteteil ein Kleber aufgetragen wird, daß auf das Bauteil ein den Verbindungsbereich und das Verbindungselement übergreifendes Formteil aufgesetzt wird, daß unter Einfüllen von Vergußmasse in das Formteil das sich im Verbindungsbereich auf dem Kleber abstützendes, das Verbindungselement lose übergreifendes Halteteil ausgeformt wird, und daß das Formteil nach Aushärten der Vergußmasse und Abbinden des Klebers entfernt wird.

Durch dieses Verfahren wird eine Verbindung geschaffen, bei der das Verbindungselement unter dem an dem ersten Bauteil befestigten Halteteil verschiebbar ist. Wird mit dem Verbindungsteil wenigstens ein weiteres Bauteil verbunden, so sind die beiden Bauteile gegeneinander verstellbar bzw. verschiebbar. Dieses Verfahren zeichnet sich durch große Einfachheit aus. Insbesondere bei Serienfertigungen werden gegenüber den bisherigen Methoden zum Herstellen verstellbarer Verbindungen Materialersparnisse und insbesondere Zeitersparnisse erzielt, wodurch sich eine Kostensenkung ergibt.

Gemäß einer Weiterbildung der Erfindung wird das Verbindungselement vor dem Formen des Halteteils aus Vergußmasse mit einem Trennmittel behandelt. Dadurch wird sichergestellt, daß das Verbindungselement nach dem Aushärten der Vergußmasse unter dem Halteteil verstellbar bzw. verschiebbar ist.

Als Vergußmasse kann zum Beispiel ein Zweikomponentenmaterial verwendet werden. Die beiden Komponenten werden dann direkt vor dem Einfüllen gemischt. Über eine chemische Reaktion wird der feste Zustand erreicht. Es sind aber auch einkomponentige Systeme, die thermisch reagieren, einsetzbar.

Nach einer anderen Weiterbildung des erfindungsgemäßen Verfahrens wird die Vergußmasse in das Formteil eingespritzt. In diesem Fall ist das Formteil mit einer Einspritzöffnung versehen. Spritzgießen beschleunigt die Durchführung des Verfahrens. Das Formteil kann zusammen mit der Spritzdüse auf das erste Bauteil aufgesetzt und nach dem Aushärten der Vergußmasse zusammen mit der Spritzdüse von dem Bauteil entfernt werden.

Eine nach dem erfindungsgemäßen Verfahren hergestellte Verbindung zeichnet sich dadurch aus, daß sie ein auf ein erstes Bauteil aufgesetztes Verbindungselement aufweist, das von einem U-förmigen vor Ort aus Vergußmasse gefertigten Halteteil übergriffen und von dem Halteteil an dem ersten Bauteil lose gehalten wird, womit das Verbindungselement zwischen dem ersten Bauteil und dem Halteteil verschiebbar ist. Eine solche U-förmige Ausbildung des Halteteils ist geeignet, größere Kräfte aufzunehmen, weil das Halteteil mit seinen beiden U-Flanschen beidseitig des Verbindungsteils mit dem ersten Bauteil fest verbunden ist.

Das Halteteil kann jedoch jede geeignete Formgebung aufweisen, welche die Bedingung erfüllt, daß das Halteteil einerseits mit dem ersten Bauteil fest verbunden ist und andererseits das Verbindungselement so übergreift, daß das Verbindungselement an dem ersten Bauteil festgehalten wird, jedoch zugleich gegenüber dem ersten Bauteil verschiebbar bzw. verstellbar ist.

Vorzugsweise ist das Halteteil derart geformt, daß das Verbindungselement zwischen dem ersten Bauteil und dem Halteteil drehbar gehalten ist. In diesem Fall ist das vor Ort aus der Vergußmasse gefertigte Halteteil nicht U-förmig ausgebildet, sondern derart, daß es für das Verbindungselement eine Drehlagerung ausbildet. Das Verbindungselement kann dazu beispielsweise einen hohlzylindrischen Abschnitt aufweisen, in dessen Innenbereich das Halteteil vorsteht und mit dem ersten Bauteil verbunden ist und somit eine Achse ausbildet.

Nach weiteren Ausbildungen kann das Halteteil wenigstens eine gegen das Verbindungselement vorstehende Feststelleinrichtung, vorzugsweise Feststellschraube aufweisen, mit der das Verbindungselement festgestellt wird und danach dann nicht mehr verschiebbar bzw. verstellbar ist. Hier können sämtliche geeigneten Feststellmittel zur Anwendung kommen, beispielsweise auch in Bohrungen geführte Feststellstifte, die in entsprechende Bohrungen des Verbindungselementes vorschiebbar sind.

Eine nach dem erfindungsgemäßen Verfahren hergestellte Verbindung ist überall dort einsetzbar, wo verstellbare Verbindungen sehr kostengünstig hergestellt werden sollen. Beispielsweise ist das Verfahren geeignet für das Herstellen von verstellbaren Verbindungen zwischen Glasflächen bzw. Verbindungen zwischen Glasflächen und aus anderen Materialien, wie Metallen, bestehenden Bauteilen, wie für den Einbau der Fensterscheiben in die Karosserie in der Automobilindustrie.

Ausführungsbeispiele der Erfindung, sind in den Zeichnungen dargestellt. Es zeigen:
- Fig. 1: ein erstes Ausführungsbeispiel der Erfindung in einem Schnitt längs der Linie I-I in Fig. 2,
- Fig. 2: eine Draufsicht auf die beispielsweise Ausführung nach Fig. 1,
- Fig. 3: einen Schnitt längs der Linie III-III in Fig. 2
- Fig. 4: einen Schnitt längs der Linie IV-IV in Fig. 2,
- Fig. 5: das Verstellen des Verbindungselementes, dargestellt an der Schnittdarstellung gemäß Fig. 1,
- Fig. 6: das Herstellen des Halteteils zum Ausführungsbeispiel nach den Fig. 1 bis 5 in einem Schnitt längs der Linie VI-VI in Fig. 7,
- Fig. 7: eine Draufsicht auf die Fertigungsanordnung gemäß Fig. 6,
- Fig. 8 bis 10: ein weiteres Ausführungsbeispiel der Erfindung in Schnittdarstellungen,
- Fig. 11: ein anderes Ausführungsbeispiel der Erfindung in Schnittdarstellung,
- Fig. 12 und 13: ein weiteres Ausführungsbeispiel der Erfindung in Schnittdarstellungen und

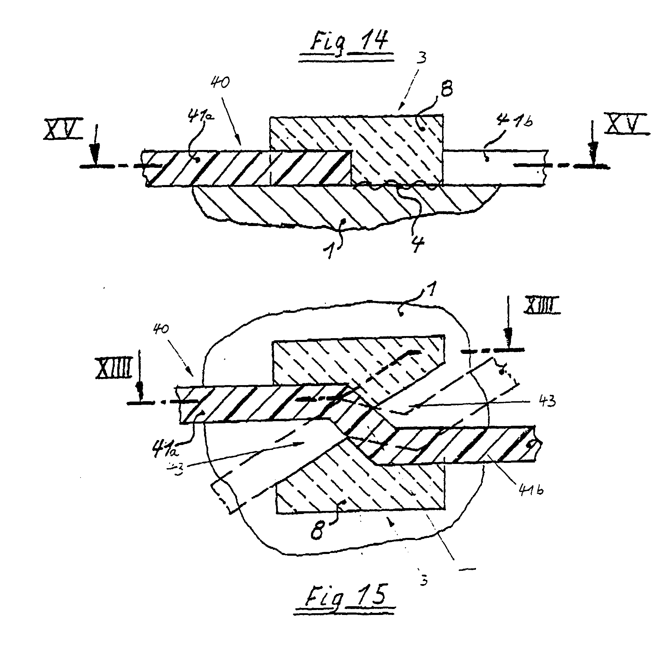

- Fig. 14 und 15: ein anderes Ausführungsbeispiel der Erfindung in Schnittdarstellungen.

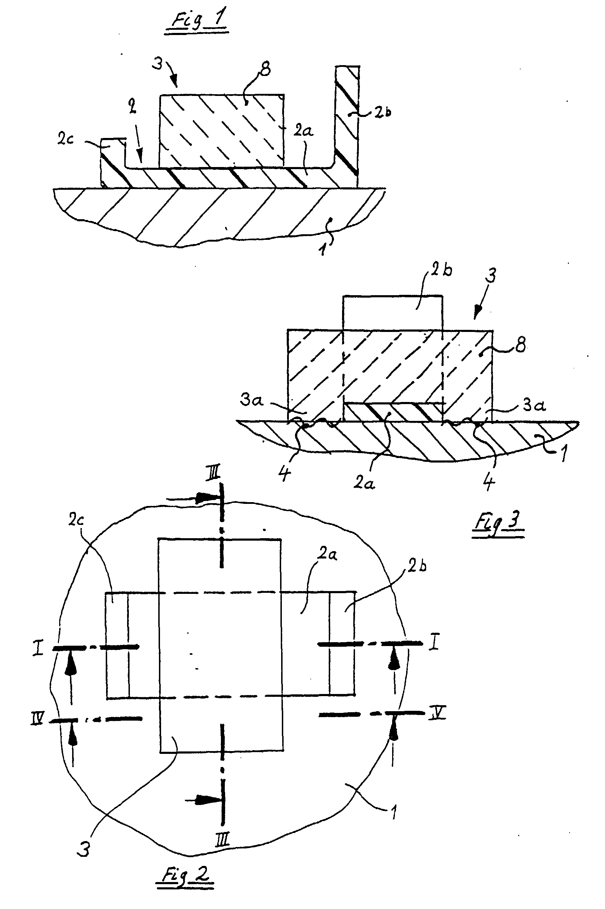

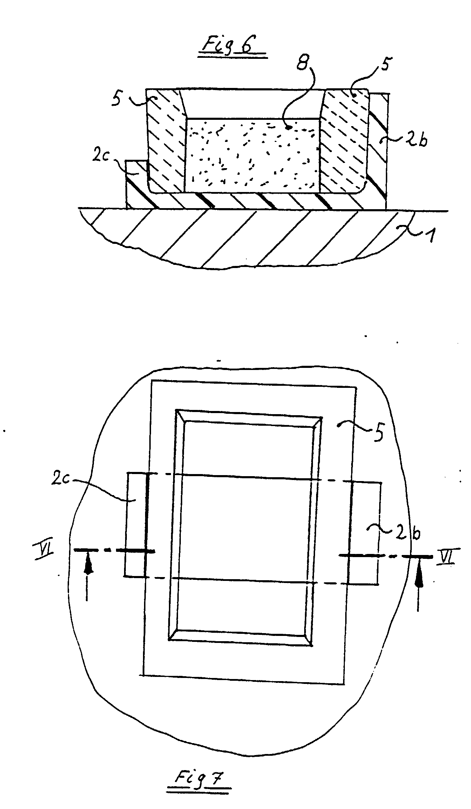

Bei dem Ausführungsbeispiel nach den Fig. 1 bis 7 wird ein Verbindungselement 2 auf einem Bauteil 1 verstellbar bzw. verschiebbar angeordnet. Am Verbindungsort wird ein Halteteil hergestellt, das daß Verbindungselement am Bauteil so festhält, daß ein Verschieben des Verbindungselementes möglich ist. Das Verbindungselement 2 kann dann mit einem oder mit mehreren weiteren Bauteilen verbunden werden, so daß damit eine verstellbare bzw. verschiebbare Verbindung zwischen den Bauteilen hergestellt ist.

Im Ausführungsbeispiel besteht das Verbindungsteil 2 aus einem im Querschnitt rechteckigen, flachen, länglichen Basisteil 2a, an dessen Enden sich um 90° abgewinkelt aufwärts verlaufende Flansche 2b und 2c mit gleichem rechteckigen Querschnitt anschließen. Das Halteteil 3 mit gleichfalls rechteckigem Querschnitt ist U-förmig ausgebildet. Es übergreift das Basisteil 2a des Verbindungselementes derart, daß seine U-Flansche zum Bauteil 1 vorstehen, mit dem sie verbunden sind. Die Dimensionierung des Freiraumes des Halteteils 3 zwischen seinen U-Flanschen 3a mit Bezug auf das Basisteil 2a des Verbindungselementes 2 ist dabei so abgestimmt, daß das Verbindungselement unter dem Halteteil 3 in seiner Längsrichtung verschiebbar ist.

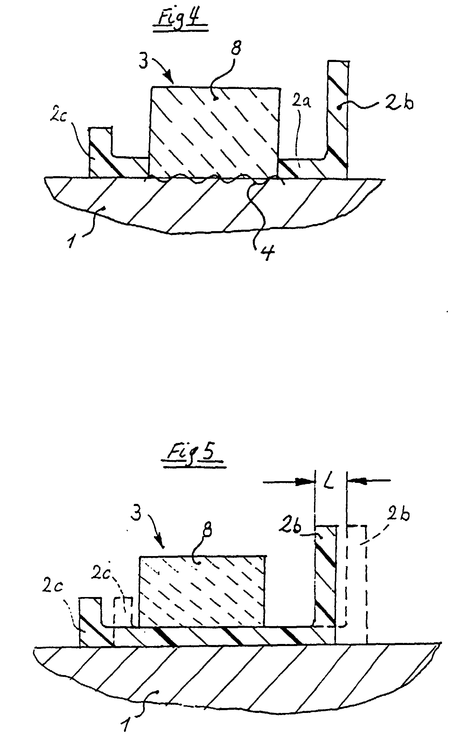

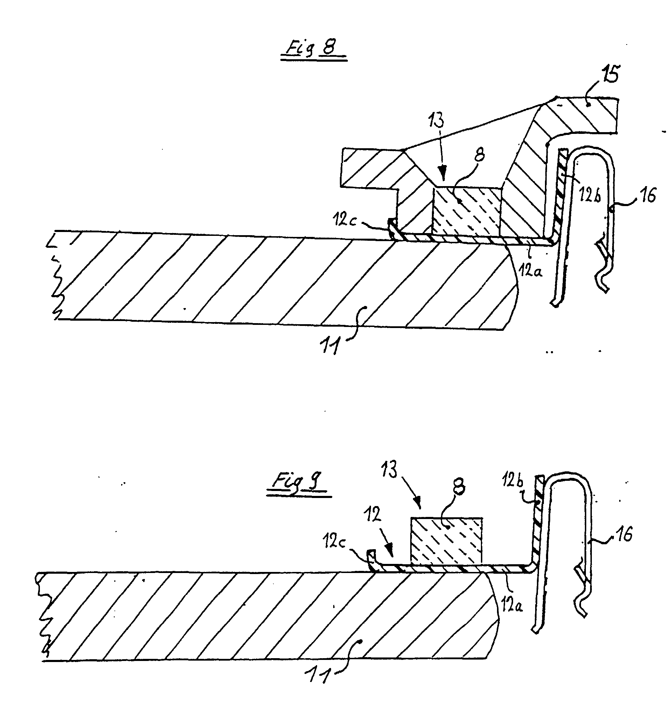

Die Herstellung dieser Verbindung geschieht folgendermaßen: Die Verbindungsbereiche zwischen dem Bauteil 1 und den beiden U-Flanschen 3a des Bauteils 3 werden mit einem Kleber 4 bestrichen (Fig. 3). Wie in Fig. 6 und 7 dargestellt, wird dann ein Formteil 5, welches die Formgebung des Halteteils mit seiner U-Form beinhaltet, auf das Bauteil 1 aufgesetzt, das somit einen Abschnitt des Basisteils 2a des Verbindungselementes 2 zwischen den Flanschen 2b und 2c des Verbindungselementes übergreift. In das oben offene Formteil 5 wird im nächsten Schritt eine Vergußmasse 8 eingefüllt, womit sich in dem Formteil das U-förmige Halteteil 3 ausbildet. Dabei verbindet sich die die U-Flansche 3a des Halteteils 3 ausbildende Vergußmasse 8 in den Verbindungsbereichen mit dem Kleber 4 und somit mit dem Bauteil 1. Nach dem Aushärten der Vergußmasse 8 und dem Abbinden des Klebers 4 und dem Entfernen des Formteils 5 ist die verschiebbare Verbindung des Verbindungselementes 2 mit dem Bauteil 1 hergestellt. Vor dem Ausformen des Halteteils 3 kann das Basisteil 2a des Verbindungselementes 2 mit einem Trennmittel bestrichen werden, um sicherzustellen, daß die Vergußmasse 8 nicht an dem Verbindungsteil 2 haftet.

Das Verbindungselement kann dann über den Flansch 2b oder über den Flansch 2c oder über beide Flansche gleichzeitig mit einem oder mit mehreren weiteren nicht dargestellten Bauteilen verbunden werden. Fig. 5 zeigt, wie nach Fertigstellung das Verbindungselement 2 um beispielsweise ein Maß L unter dem Halteteil 3 verschoben werden kann. Entsprechend ist die Verbindung zwischen dem Bauteil 1 und wenigstens einem mit dem Verbindungselement verbundenen Bauteil 2 um das Maß L verschiebbar bzw. verstellbar.

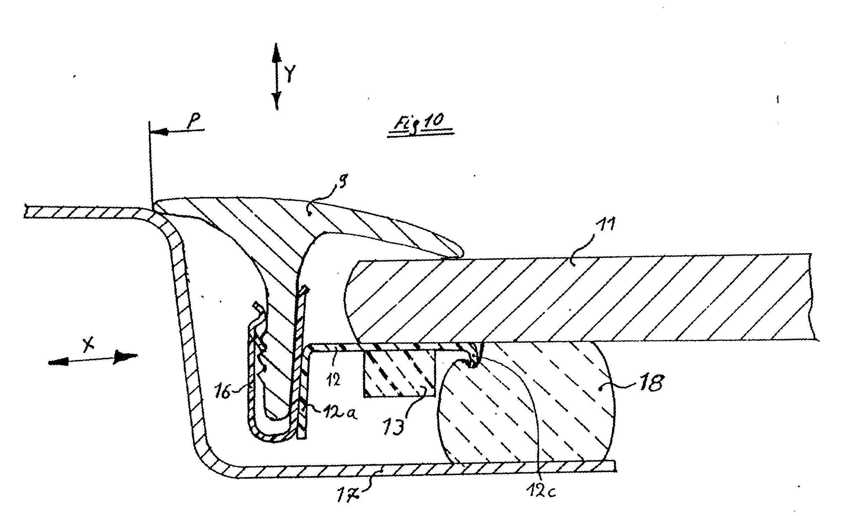

Die Fig. 8 bis 10 zeigen ein Anwendungsbeispiel der erfindungsgemäßen Verbindung im Kraftfahrzeugbau. Erstes Bauteil 11 ist hier die Glasscheibe des Fensters beispielsweise eines Personenkraftwagens. Zwischen der Glasscheibe 11 und dem Karosserieflansch 17 soll eine Blende 9 verstellbar gehaltert werden. Zunächst wird entsprechend den Darstellungen in Fig. 8 und 9 ein in diesem Fall aus einem Metallstreifen gefertigtes Verbindungselement 12 mit einem Basisteil 12a und abgewinkelten Flanschen 12b und 12c auf die Glasscheibe 11 aufgelegt und wird nach Auftragen eines Klebers mit Hilfe eines Formteils 15 wieder ein U-förmiges Halteteil 13 aus Vergußmasse 8 hergestellt, wie beim Ausführungsbeispiel nach den Fig. 1 bis 7 im einzelnen beschrieben.

Fig. 9 zeigt die fertiggestellte Anordnung des Halteteils 13 und des Verbindungselementes 12 auf der Glasscheibe 11. An dem abgewinkelten Flansch 12b des Verbindungselementes 12 ist eine U-förmige Rastleiste 16 befestigt.

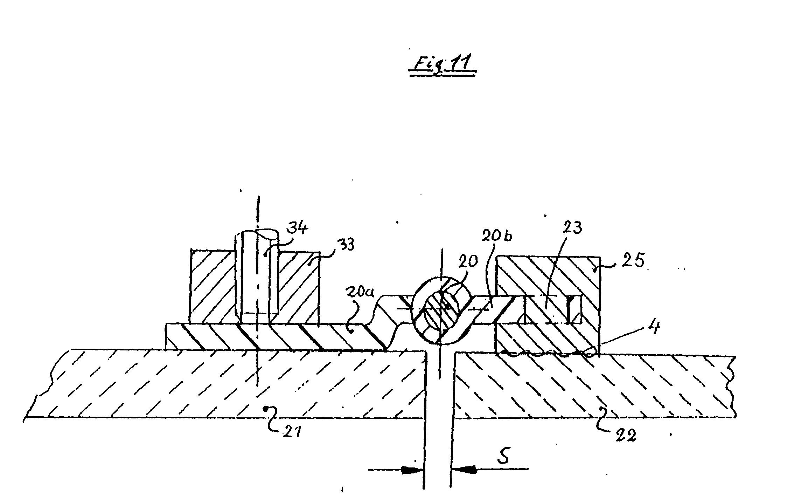

Fig. 10 zeigt, wie die entsprechend Fig. 8 und 9 vorbereitete Glasscheibe 11 an dem Karosserieflansch 17 angeordnet wird. Mit 18 ist ein Einbaukleber bezeichnet, der die Glasscheibe 11 mit dem Karosserieflansch 17 verbindet. Der Einbaukleber 18 wird so angeordnet, daß beim Aufsetzen der Glasscheibe 11 sich der Flansch 12c des Verbindungselementes 12 in den Einbaukleber 18 eindrückt. Nach dem Andrücken der Glasscheibe 11 an den Einbaukleber 18 und somit an den Karosserieflansch 17 wird in die Rastleiste 16 am Flansch 12a des Verbindungselementes 12 eine Blende 9 eingerastet, die den Zwischenraum zwischen Glasscheibe 11 und Karosserieflansch 17 abgedeckt. Wegen der Verschiebbarkeit des Verbindungselementes 12 in den Richtungen des Doppelpfeils "X" kann die Blende 9 sehr einfach beispielsweise auf den Punkt P ausgerichtet werden. Nach dem Aushärten des Einbauklebers 18 ist der andere Flansch 12c des Verbindungselementes 12 im Einbaukleber fest verankert und ist damit zugleich auch das Verbindungselement 12 gegen ein Verschieben gesichert, womit die Position der Blende 19 fixiert ist.

Fig. 11 zeigt ein anderes Anwendungsbeispiel der erfindungsgemäßen Verbindung, nämlich die Verbindung von zwei Bauteilen 21 und 22 durch ein Scharnier 20 mit Scharnierbändern 20a und 20b. Das in der Zeichnung rechte Scharnierband 20b weist eine Durchbrechung 23 auf. Zur festen Verbindung des Scharnierbandes 20b mit dem Bauteil 22 wird ein das Scharnierband übergreifender Halteblock 25 hergestellt, der mit dem Bauteil 22 verbunden ist. Dies geschieht mit einer nicht dargestellten Form ähnlich der Verfahrensweise nach Fig. 6. Im Verbindungsbereich wird auf das Bauteil 22 zunächst ein Kleber 24 aufgebracht. Dann wird in die aufgesetzte nicht dargestellte Form, die das Ende des Scharnierbandes 20b einhüllt, eine Vergußmasse 8 eingefüllt, die das Ende des Scharnierbandes 20b umschließt und sich auch durch die Durchbrechung 23 hindurch erstreckt und die sich unten mit dem Kleber 24 verbindet. Nach dem Aushärten der Vergußmasse und dem Abbinden des Klebers wird die nicht dargestellte Form entfernt und ist der Halteblock 25 ausgebildet, der das Scharnierband 20b mit dem Bauteil 22 fest verbindet.

Das andere Scharnierband 20a des Scharniers 20 ist mit dem Bauteil 21 in Anwendung der Erfindung verstellbar verbunden, nach der Ausbildung und Verfahrensweise, wie sie in dem ersten Ausführungsbeispiel nach den Fig. 1 bis 7 beschrieben ist. Das U-förmige, das Scharnierband 20a übergreifende und mit dem Bauteil 21 verbundene Halteteil ist hier mit 33 bezeichnet. Unter dem Halteteil 33 ist das Scharnierband 20a des Scharniers 20 in Längsrichtung verschiebbar. Mit 34 ist eine in dem Halteteil 33 angeordnete gegen das Scharnierband 20a verstellbare Feststellschraube bezeichnet. Durch Drehen der Feststellschraube 34 kann diese gegen das Scharnierband 20a bewegt werden, wodurch das Scharnierband 20a festgestellt werden kann, so daß es dann nicht mehr verschiebbar ist. Damit kann die Scharnier-Verbindung zwischen den beiden Bauteilen 21 und 22 bei der Montage unter Verschieben des Scharnierbandes 20a und nachträglichem Feststellen des Scharnierbandes mit der Feststellschraube 34 genau ausgerichtet werden, also die Breite des Spaltes S verändert werden.

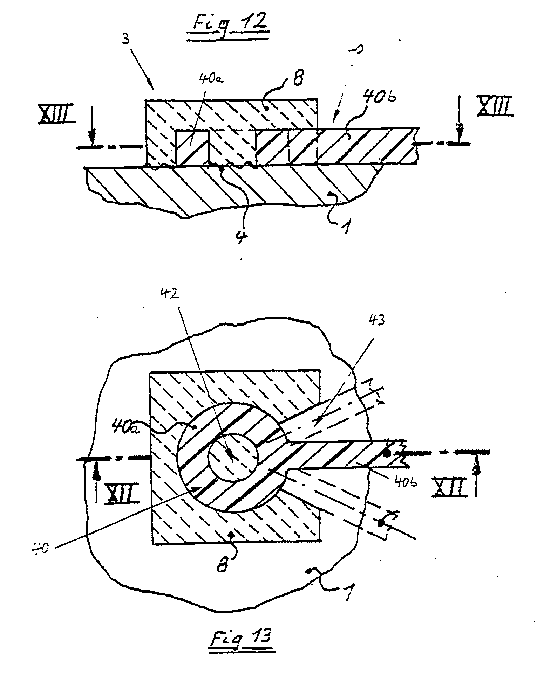

Bei dem in Fig. 12 und 13 dargestellten Ausführungsbeispiel ist das Verbindungselement 40 aus einem Hohlzylinder 40a und einem an den Hohlzylinder 40a radial angesetzten Flansch 40b ausgebildet. Das aus der Vergußmasse 8 mittels eines nicht dargestellten Formteiles entsprechend dem Ausführungsbeispiel nach Fig. 1 bis 7 ausgebildete Halteteil 3 übergreift den den Hohlzylinder 40a ausgebildenden Abschnitt des Verbindungselementes 40. Dabei steht das Halteelement 3 in den von dem Hohlzylinder 40a umschlossenen Innenraum 42 vor. Das Halteteil 3 ist dabei mit dem ersten Bauteil 1 mit dem Kleber 4 verbunden.

Bei der Ausformung des Halteteils 3 aus der Vergußmasse 8 wird vorzugsweise durch das nicht dargestellte Formteil im Bereich des radial angesetzten Flansches 40b des Verbindungselementes 40 ein Hohlraum 43 ausgebildet. Mit dem Hohlraum 43 ist ein Schwenkraum für den radial angesetzten Flansch 40b ausgebildet. Zum Schwenken des Flansches 40b wird der Hohlzylinder 40a um die durch das Halteteil 3 ausgebildete, den Innenraum 42 ausfüllende Drehachse gedreht.

Auch bei dem Ausführungsbeispiel nach Fig. 15 und 16 ist eine Drehbarkeit des Verbindungselementes 40 gegeben. Das Verbindungselement 40 besteht aus zwei flachen Bändern 41a, 41b mit jeweils rechteckigem Querschnitt, die über eine Z-förmige Abkantung 44 miteinander verbunden sind. Das aus der Vergußmasse 8 geformte Halteteil 3 übergreift das Verbindungselement 40 im Bereich der Z-förmigen Abkantung 44 und ist mit dem ersten Bauteil 1 mit dem Kleber 4 verbunden. Beim Ausformen des Halteteils 3 wird ein nicht dargestelltes Formteil verwendet. Das Formteil ist so ausgebildet, daß im Bereich des Verbindungselementes 40 Hohlräume 43 ausgebildet werden, die eine Drehung des Verbindungselementes 40 um eine durch die Z-förmige Abkantung 44 verlaufende, aus der Zeichnungsebene heraustretende Drehachse ermöglichen.

## Patentansprüche

1. Verfahren zum Herstellen einer verstellbaren Verbindung zwischen Bauteilen, mit einem die Bauteile verbindenden Verbindungselement,
wobei,
daß das Verbindungselement (2) auf ein erstes Bauteil (1) aufgesetzt wird, auf wenigstens einer Seite des Verbindungselementes auf das Bauteil in dem Verbindungsbereich mit einem auszuformenden Halteteil (3) ein Kleber (4) aufgetragen wird, auf das Bauteil (1) ein den Verbindungsbereich und das Verbindungselement übergreifendes Formteil (5) aufgesetzt wird, wobei unter Einfüllen von Vergußmasse (8) in das Formteil (5) das sich im Verbindungsbereich auf dem Kleber (4) abstützende, das Verbindungselement (2) lose übergreifende Halteteil (3) ausgeformt wird, und wobei das Formteil (5) nach Aushärten der Vergußmasse und Abbinden des Klebers entfernt wird.

2. Verfahren nach Anspruch 1, dadurch gekennzeichnet, daß das Verbindungselement (2) vor dem Formen des Halteteils (3) aus Vergußmasse (8) mit einem Trennmittel behandelt wird.

3. Verfahren nach Anspruch 1 oder 2, dadurch gekennzeichnet, daß die Vergußmasse (8) in das Formteil (5) eingespritzt wird.

4. Verfahren nach Anspruch 3, dadurch gekennzeichnet, daß das Formteil (5) zusammen mit der Spritzdüse für die Vergußmasse (8) auf den Einsatzort abgesenkt und nach dem Aushärten der Vergußmasse wieder zusammen mit der Spritzdüse abgehoben wird.

5. Mit dem Verfahren nach einem der Ansprüche 1 bis 4 hergestellte verstellbare Verbindung,
**dadurch gekennzeichnet,**
daß sie ein auf ein erstes Bauteil (1) aufgesetztes Verbindungselement (2) aufweist, das von einem U-förmigen vor Ort aus Vergußmasse (8) gefertigten Halteteil (3) übergriffen und von dem Halteteil (3) an dem ersten Bauteil (1) lose gehalten wird, womit das Verbindungselement (2) zwischen dem ersten Bauteil (1) und dem Halteteil (3) verschiebbar ist.

6. Verbindung nach Anspruch 5, dadurch gekennzeichnet, daß das Verbindungselement (2) in Form eines flachen Bandes mit rechteckigem Querschnitt ausgebildet ist und daß die Enden des Verbindungselementes rechtwinklig abgebogene Flansche (2b, 2c) aufweisen.

7. Mit dem Verfahren nach einem der Ansprüche 1 bis 4 hergestellte verstellbare Verbindung,
**dadurch gekennzeichnet,**
daß sie ein auf ein erstes Bauteil (1) aufgesetztes Verbindungselement (40) aufweist, das von einem vor Ort aus Vergußmasse (8) gefertigten Halteteil (3) abschnittsweise übergriffen und von dem Halteteil (3) an dem ersten Bauteil (1) lose gehalten wird, womit das Verbindungselement (40) zwischen dem ersten Bauteil (1) und dem Halteteil (3) drehbar ist.

8. Verbindung nach Anspruch 7, dadurch gekennzeichnet, daß das Verbindungselement (40) aus einem Hohlzylinder (40a) und einem an den Hohlzylinder (40a) radial angesetzten Flansch (40b) ausgebildet ist.

9. Verbindung nach Anspruch 7, dadurch gekennzeichnet, daß das Verbindungselement (40) aus zwei über eine Z-förmige Abkantung (44) miteinander verbundenen, flachen Bändern (41a, 41b) mit rechteckigem Querschnitt ausgebildet ist.

10. Verbindung nach einem der Ansprüche 5 bis 9, dadurch gekennzeichnet, daß sie eine Feststelleinrichtung zum Feststellen des Verbindungselementes (2,40) aufweist.

11. Verbindung nach Anspruch 10, dadurch gekennzeichnet, daß in dem Halteteil (3) eine gegen das Verbindungselement (2,40) bewegbare Feststellschraube (34) angeordnet ist.

## Claims

1. A method for manufacturing an adjustable connection between component parts, with a connecting member connecting the component parts, wherein the connecting member (2) is placed on to a first component part (1), on at least one side of the connecting member an adhesive (4) is applied to the component part in the connection region with a retaining part (3) to be formed, a shaped part (5) overlapping the connection region and the connecting member is placed on to the component part (1), wherein the retaining part (3) supported on the adhesive (4) in the connection region and loosely overlapping the connecting member (2) is formed by filling casting compound (8) into the shaped part (5), and wherein the shaped part (5) is removed after hardening of the casting compound and bonding of the adhesive.

2. A method according to Claim 1, characterised in that before the retaining part (3) is formed from casting compound (8) the connecting member (2) is treated with a parting agent.

3. A method according to Claim 1 or 2, characterised in that the casting compound (8) is injected into the shaped part (5).

4. A method according to Claim 3, characterised in that the shaped part (5) together with the injection nozzle for the casting compound (8) is lowered on to the site of use and after hardening of the casting compound lifted off again together with the injection nozzle.

5. An adjustable connection manufactured by the method according to one of Claims 1 to 4, characterised in that it has a connecting member (2) placed on to a first component part (1), the said connecting member being overlapped sectionwise by a U-shaped retaining part (3) produced in situ from casting compound (8) and loosely held by the retaining part (3) on the first component part (1) by which means the connecting member (2) is displaceable between the first component part (1) and the retaining part (3).

6. A connection according to Claim 5, characterised in that the connecting member (2) is in the form of a flat band of rectangular cross-section and that the ends of the connecting member (2) have flanges (2b, 2c) bent in a right angle.

7. An adjustable connection manufactured by the method according to one of Claims 1 to 4, characterised in that it has a connecting member (40) placed on to a first component part (1), the said connecting member being overlapped sectionwise by a retaining part (3) produced in situ from casting compound (8) and loosely held by the retaining part (3) on the first component part (1), by which means the connecting member (40) is rotatable between the first component part (1) and the retaining part (3).

8. A connection according to Claim 7, characterised in that the connecting member (40) is formed from a hollow cylinder (40a) and a flange (40b) radially positioned on to the hollow cylinder (40a).

9. A connection according to Claim 7, characterised in that the connecting member (40) is formed from two flat bands (41a, 41b) of rectangular cross-section connected with each other via a z-shaped edge (44).

10. A connection according to one of Claims 5 to 9, characterised in that it has a securing device for securing the connecting member (2, 40).

11. A connection according to Claim 10, characterised in that a securing screw (34) movable towards the connecting member (40, 2) is disposed in the retaining part (3).

## Revendications

1. Procédé de réalisation d'une liaison réglable entre des composants, au moyen d'un élément de liaison reliant les composants, dans lequel l'élément de liaison (2) est placé sur un premier composant (1), sur au moins un côté de l'élément de liaison une colle (4) est appliquée sur le composant dans la zone de liaison avec un élément de maintien (3) à mouler, sur le composant (1) est placé un élément de moulage (5) qui passe sur la zone de liaison et sur l'élément de liaison, dans lequel par introduction d'une masse de scellement (8) dans l'élément de moulage (5), l'élément de maintien (3) qui prend appui sur la colle (4) dans la zone de liaison et qui passe librement sur l'élément de liaison (2), est moulé et dans lequel l'élément façonné (5) est enlevé après durcissement de la masse de scellement et prise de la colle.

2. Procédé selon la revendication 1, caractérisé en ce que l'élément de liaison (2) est traité avec un agent de démoulage avant le moulage de l'élément de maintien (3) dans la masse de scellement (8).

3. Procédé selon la revendication 1 ou 2, caractérisé en ce que la masse de scellement (8) est injectée dans l'élément de moulage (5).

4. Procédé selon la revendication 3, caractérisé en ce que l'élément de moulage (5) est abaissé sur le lieu d'utilisation avec la buse d'injection de la base de scellement (8) et, après durcissement de la base de scellement, il est à nouveau relevé avec la buse d'injection.

5. Liaison réglable pouvant être réalisée avec le procédé selon l'une des revendications 1 à 4, caractérisée en ce qu'elle comporte un élément de liaison (2) placé sur un premier composant (1), sur lequel passe un élément de maintien (3) en U fabriqué sur place dans la masse de scellement (8), et qui est maintenu librement par l'élément de maintien (3) sur le premier composant (1), ce qui fait que l'élément de liaison (3) peut coulisser entre le premier composant (1) et l'élément de maintien (3).

6. Liaison selon la revendication 5, caractérisée en ce que l'élément de liaison (2) est réalisé sous la forme d'une bande plate de section transversale rectangulaire et en ce que les extrémités de l'élément de liaison présentent des brides (2b, 2c) repliées à angle droit.

7. Liaison réglable pouvant être réalisée avec le procédé selon l'une des revendications 1 à 4, caractérisée en ce qu'elle comporte un élément de liaison (40) placé sur un premier composant (1), sur lequel passe par endroits un élément de maintien (3) fabriqué sur place dans la masse de scellement (8), et qui est maintenu librement par l'élément de maintien (3) sur le premier composant (1), ce qui fait que l'élément de liaison (40) peut tourner entre le premier composant (1) et l'élément de maintien (3).

8. Liaison selon la revendication 7, caractérisée en ce que l'élément de liaison (40) est constitué d'un cylindre creux (40a) et d'une bride (40b) placée radialement sur le cylindre creux (40a).

9. Liaison selon la revendication 7, caractérisée en ce que l'élément de liaison (40) est constitué de deux bandes plates (41a, 41b), reliées entre elles par une pliure en Z (44) et de section transversale rectangulaire.

10. Liaison selon l'une des revendications 5 à 9, caractérisée en ce qu'elle comporte un dispositif de blocage pour le blocage de l'élément de liaison (2, 40).

11. Liaison selon la revendication 10, caractérisée en ce qu'une vis de blocage (34), déplaçable par rapport à l'élément de liaison (2, 40), est disposée dans l'élément de maintien (3).
